# FASCICULE DE BREVET EUROPEEN

(11) **EP 0 864 949 B1**
(45) Date de publication et mention de la délivrance du brevet: **04.06.2003**
(21) Numéro de dépôt: 98104494.4
(22) Date de dépôt: 12.03.1998
(51) Int. Cl.: G05B 17/02, G05B 23/02

(54) **Procédé de diagnostic dynamique d'un actionneur**
Methode zur dynamischen Diagnose eines Stellglieds
Method for the dynamic diagnosis of an actuator

(30) Priorité: 14.03.1997 FR 9703319
(43) Date de publication de la demande: 16.09.1998
(73) Titulaire: Siemens VDO Automotive S.A.S., 31036 Toulouse Cédex 01 (FR)
(72) Inventeur: Suquet, Michel, 31270 Villeneuve Tolosane (FR)
(74) Mandataire: Berg, Peter, Dipl.-Ing.

(56) Documents cités:
- EP-A- 0 111 064
- US-A- 4 637 002
- US-A- 5 422 553

## Description

La présente invention a pour objet un procédé de diagnostic d'un actionneur et plus particulièrement un tel procédé capable de diagnostiquer de manière dynamique pendant l'exécution de la commande de l'actionneur.

Les véhicules automobiles actuels font usage de nombre d'actionneurs commandés en position afin de réaliser le contrôle, par exemple, des moteurs à explosion. De tels actionneurs peuvent être commandés en position, comme par exemple un papillon des gaz électrique, des vannes de recirculation des gaz d'échappement, etc.

On connaît de la technique antérieure, et plus particulièrement du document US 4 378 776, un procédé de commande d'un actionneur, en l'occurrence une vanne de recirculation des gaz d'échappement, selon lequel on commande à l'actionneur de prendre une position déterminée et l'on vérifie, au bout d'un temps prédéterminé, que cette position a été atteinte par la relecture d'un capteur de position associé à l'actionneur. Lorsque, au bout du temps prédéterminé, l'actionneur n'a pas rejoint la position qu'on lui a commandée, le système de commande diagnostique une défaillance et opère la fermeture de la vanne.

Un tel procédé a cependant l'inconvénient de présenter un temps de latence entre le moment de la commande et le moment où le diagnostic est possible. En effet, le temps de réaction de l'actionneur n'est pas nul et il est donc nécessaire d'attendre un temps suffisamment long pour que toute commande puisse être exécutée avant de procéder au diagnostic. Ainsi donc, le délai préalable au diagnostic doit être déterminé en prenant en compte la commande d'amplitude la plus grande possible et la vitesse la plus lente possible de l'actionneur. Un tel procédé présente, en outre, l'inconvénient de ne pouvoir être utilisé dans le cas où la commande de l'actionneur est variable, le temps entre deux changements de consigne pouvant être inférieur au délai préalable au diagnostic.

La présente invention a pour objet de proposer un procédé de diagnostic qui ne présente pas cet inconvénient de la technique antérieure et permette à tout moment de procéder au diagnostic de l'actionneur.

On atteint ces buts de l'invention, ainsi que d'autres qui apparaîtront au cours de la description qui va suivre, au moyen d'un procédé de diagnostic d'un actionneur du type comportant un mécanisme d'entraînement commandé par une consigne en position délivrée par un calculateur et un capteur fournissant la position réelle de l'actionneur. Selon l'invention, à tout instant, on détermine, à partir de la consigne, une position théorique de l'actionneur au moyen d'un modèle représentatif du comportement le plus lent acceptable de celui-ci ; on calcule une erreur tolérée à partir de la position théorique et de la consigne ; on compare une erreur réelle entre la position réelle et la consigne à l'erreur tolérée et on conclut à une défaillance de l'actionneur si l'erreur réelle est supérieure à l'erreur tolérée. Selon une caractéristique importante de la présente invention, on tire la position théorique de l'actionneur d'un filtrage du signal de consigne. Dans un premier mode de réalisation du procédé, on identifie la position théorique de l'actionneur à sa position actuelle lors d'un changement de sens de la consigne. Selon un autre mode de réalisation, on identifie la position théorique à la position actuelle à chaque variation de la consigne. Selon une autre caractéristique importante de l'invention, on calcule d'erreur tolérée en fonction de la valeur absolue de la différence entre la consigne et la position théorique et d'une constante d'erreur statique.

D'autres caractéristiques et avantages du procédé selon l'invention apparaîtront à la lecture de la description qui va suivre et à l'examen du dessin annexé dans lequel
- la figure 1 représente un exemple d'architecture fonctionnelle d'un calculateur propre à la mise en oeuvre du procédé selon l'invention, et
- la figure 2 représente un graphe temporel utile à la compréhension du procédé.

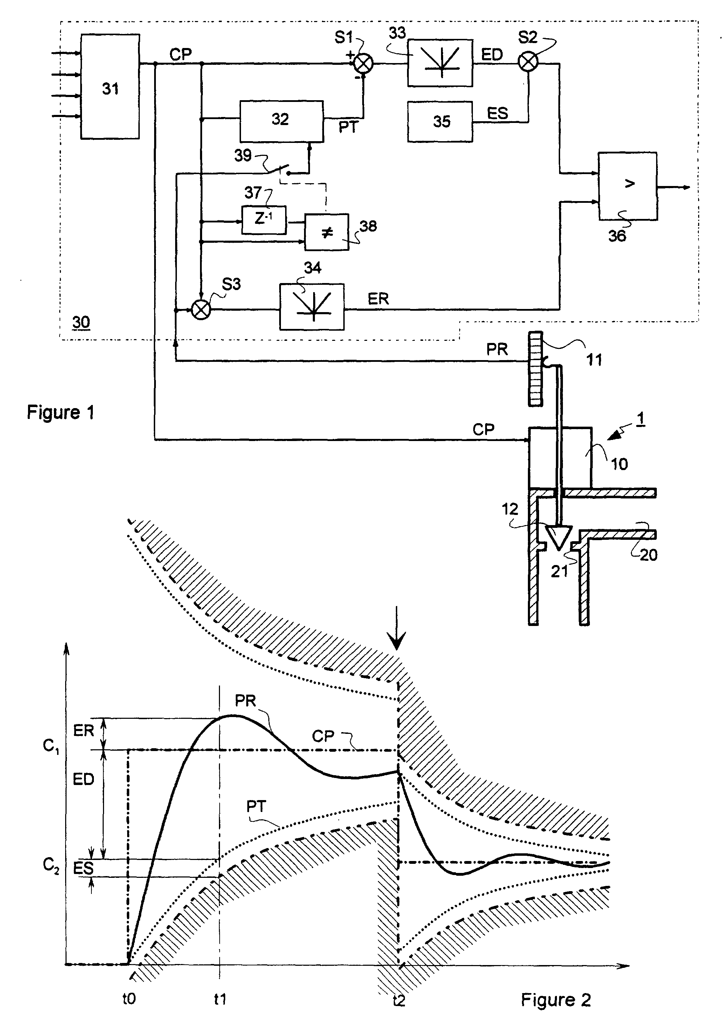

On se réfère maintenant à la figure 1 où l'on a représenté en 1 un actionneur, par exemple une vanne de recirculation des gaz d'échappement comportant un mécanisme d'entraînement 10. Ce mécanisme d'entraînement est propre à déplacer un élément mobile 12, par exemple pour venir obturer un siège 21 ménagé dans une conduite de gaz d'échappement 20. Le mécanisme d'entraînement 10 est commandé par un signal de consigne en position CP délivré par un calculateur 30. L'élément mobile 12 est relié à un capteur de position 11 qui délivre au calculateur 30 un signal représentatif de la position réelle PR de l'élément mobile. Le. calculateur 30 comporte un bloc 31 de calcul d'un signal de consigne en position CP sur la base de variables non représentées, telles que régime moteur, charge, etc. de manière classique. La consigne en position est délivrée à un modèle 32 représentatif du comportement le plus lent acceptable pour l'actionneur. Le modèle 32 fournit en sortie un signal de position théorique PT de l'actionneur. Avantageusement, le modèle 32 peut être un filtre du premier ordre dont les coefficients sont calculés pour être représentatifs du mouvement le plus lent permis à l'actionneur. Le signal de position théorique PT est ensuite soustrait du signal de consigne en position dans un sommateur S1. A la sortie du sommateur S1, le signal de différence est fournit à un bloc de calcul de la valeur absolue 33 qui fournit en sortie un signal ED représentatif de l'erreur dynamique maximale tolérée. Le signal d'erreur dynamique est ensuite additionné, dans un sommateur S2, à un signal représentant une erreur statique délivrée par un bloc 35. Le signal d'erreur statique ES peut être constant, par exemple pour tenir compte de l'imprécision de mesure du capteur 11 ou encore variable, par exemple avec le régime pour prendre en compte des incertitudes de mesure liées aux vibrations du moteur. A la sortie du sommateur S2, un signal représentant la somme de l'erreur dynamique et de l'erreur statique est fourni à une entrée d'un comparateur 36. Le signal de consigne en position CP est également fournit à un troisième sommateur S3 qui reçoit aussi le signal de position réelle PR délivré par le capteur 11. La différence entre le signal de consigne en position CP et le signal de position réelle PR effectué par le sommateur S3 est ensuite transmise à un bloc de calcul de la valeur absolue 34 qui fournit un signal d'erreur réelle ER. Ce signal d'erreur réelle ER est transmis à une deuxième entrée du comparateur 36. Le comparateur 36 est agencé de manière à fournir en sortie un signal de diagnostic réprésentatif d'un défaut de fonctionnement de l'actionneur lorsque le signal d'erreur réelle ER est supérieur à l'erreur tolérée représentée par la somme du signal d'erreur dynamique et du signal d'erreur statique délivré par le sommateur S2.

Avantageusement, le signal de consigne en position CP est également délivré à un bloc de retard 37 dont la sortie est reliée à un second comparateur 38 recevant sur sa seconde entrée le signal de consigne en position. Ainsi donc, le comparateur 38 peut détecter une variation du signal de consigne en position. Le comparateur 38 peut être agencé de manière à détecter, soit un changement d'état du signal de consigne en position, soit encore de manière différentielle pour détecter un changement de sens de variation du signal de consigne en position. La sortie du comparateur 38 pilote un commutateur 39 permettant d'imposer, sur une entrée d'initialisation du modèle 32, la valeur du signal de position réelle de l'actionneur. Dans ce cas, e signa de position théorique PT en sortie du modèle 32 est identifié au signal de position réelle présent sur l'entrée d'initialisation de celui-ci.

On se réfère maintenant à la figure 2 pour expliciter le fonctionnement du procédé selon l'invention. Sur le graphe de la figure 2, on a représenté en abcisse le temps et en ordonnée la position occupée par l'élément mobile 12 de l'actionneur 1. A l'instant t0, le signal de consigne en position CP représenté en trait mixte sur la figure prend une valeur C₁. L'élément mobile 12 se déplace alors selon la courbe représentative de sa position réelle PR en trait plein sur le dessin. Concomitamment, le signal de sortie du modèle 32 évolue à partir de t0 selon la courbe PT en pointillés. L'effet du bloc de calcul de valeur absolue 33 est traduit sur le dessin par une courbe symétrique par rapport au signal de consigne en position CP. On a représenté sur le dessin la valeur de sortie du sommateur S2 par un trait mixte délimitant une zone hachurée également symétrique par rapport au signal de consigne en position. Ainsi qu'on peut le voir matérialisé à l'instant t1, l'erreur dynamique en sortie du bloc de valeur absolue 33 est représenté par la magnitude de l'écart entre le signal de position théorique PT et le signal de consigne en position CP. On déduit le signal de sortie du sommateur S2 par un décalage correspondant à l'erreur statique ES vers l'extérieur de la courbe représentative de la position théorique. On a également représenté l'erreur réelle en sortie du bloc de calcul de la valeur aboslue 34 correspondant à la magnitude de l'écart entre le signal de position réelle et le signal de consigne en position CP. On peut ainsi constater que l'on a matérialisé une zone de positions tolérées pour la position réelle de l'actionneur délimitée de part et d'autre de la position de consigne par la somme de l'erreur dynamique et de l'erreur statique tolérée. Dès lors que le signal de position réelle PR ne pénètre pas dans la zone hachurée représentant les limites de cette erreur tolérée, le signal de diagnostic constate un bon fonctionnement de l'actionneur. A l'instant t2, le bloc 31 impose un changement de la consigne en position du niveau C₁ au niveau C₂. Ce changement de consigne représente un changement du sens de variation du signal CP détecté par le comparateur 38. Celui-ci agit alors sur le commutateur 39 pour initialiser la valeur de la position théorique du modèle 32 à la valeur de la position réelle PR de l'actionneur. La sortie du module 32 évolue ensuite selon le modèle auquel on applique la nouvelle consigne C₂. Comme on l'a vu précédemment, on détermine ainsi un encadrement de la valeur de la position réelle de l'actionneur à tout instant.

On peut ainsi constater que l'on a défini un procédé permettant d'encadrer la valeur de la position réelle de l'actionneur par un jeu delimites évoluant symétriquement autour de la position de consigne permettant ainsi de diagnostiquer, en cas de franchissement de ces limites, une défaillance de l'actionneur. On peut alors prendre les mesures appropriées, telles qu'immobilisation de l'actionneur ou bien fermeture de celui-ci.

Bien entendu, l'invention n'est pas limitée à l'exemple ci-dessus décrit, mais peut être encore appliqué à tout type d'actionneur commandé en position et relié à un capteur permettant de relire la position réelle de l'actionneur. On pourra citer, par exemple, la commande d'un papillon des gaz couplé avec un potentiomètre rotatif indicateur de sa position angulaire, ou encore une vanne de régulation de ralenti, etc.

## Revendications

1. Procédé de diagnostic dynamique d'un actionneur (1), du type comportant un mécanisme d'entraînement (10) commandé par une consigne (CP) en position délivrée par un calculateur (30) et un capteur (11) fournissant la position réelle (PR) de l'actionneur, **caractérisé en ce que**, à tout instant,
• on détermine à partir de la consigne (CP) une position théorique (PT) de l'actionneur au moyen d'un modèle (32) représentatif du comportement le plus lent acceptable de l'actionneur,
• on calcule une erreur tolérée (ED) à partir de la position théorique et de la consigne,
• on compare une erreur réelle (ER) entre la position réelle et la consigne à l'erreur tolérée, et
• on conclut à une défaillance de l'actionneur si l'erreur réelle est supérieure à l'erreur tolérée.

2. Procédé selon la revendication 1, **caractérisé en ce que** la position théorique de l'actionneur est obtenue par un filtrage de la consigne.

3. Procédé selon la revendication 2, **caractérisé en ce que** la position théorique est identifiée à la position actuelle lors d'un changement de sens de la consigne.

4. Procédé selon la revendication 2, **caractérisé en ce que** la position théorique est identifiée à la position actuelle à chaque variation de la consigne.

5. Procédé selon la revendication 1 ou 2, **caractérisé en ce que** l'erreur tolérée est calculée en fonction de la valeur absolue de la différence entre la consigne et la position théorique et d'une constante d'erreur statique.

## Claims

1. Method for dynamic diagnosis of an actuator (1) of the type with a drive mechanism (10) controlled by a position reference variable (CP) supplied by a computer (30) and a sensor (11) supplying the actual position (PR) of the actuator, **characterised in that**, at any time:
• a theoretical position (PT) of the actuator is determined from the reference variable (CP) by means of a model (32) representing the slowest acceptable behaviour of the actuator,
• a tolerated error (ED) is computed from the theoretical position and the reference variable,
• an actual error (ER) between the actual position and the reference variable is compared with the tolerated error, and
• failure of the actuator is deduced if the actual error is greater than the tolerated error.

2. Method according to Claim 1, **characterised in that** the theoretical position of the actuator is obtained by filtering the reference variable.

3. Method according to Claim 2, **characterised in that** the theoretical position is flagged at the current position whenever the reference variable changes direction.

4. Method according to Claim 2, **characterised in that** the theoretical position is flagged at the current position whenever the reference variable changes.

5. Method according to Claim 1 or 2, **characterised in that** the tolerated error is computed as a function of the absolute value of the difference between the reference variable and the theoretical position and of a static error constant.

## Patentansprüche

1. Verfahren zum dynamischen Diagnostizieren eines Aktors (1) des Typs, der einen Stellmechanismus (10), welcher durch einen von einem Rechner (30) abgegebencn Positions-Sollwert (CP) gesteuert wird, und einen Aufriehmer (11), der die Istwertposition (PR) des Aktors liefert, umfasst, **dadurch gekennzeichnet, dass** in jedem Augenblick:
- ausgehend von dem Sollwert (CP) eine theoretische Position (PT) des Aktors mittels eines Modells (32) bestimmt wird, das das langsamstzulässige Verhalten des Aktors darstellt,
- ein tolerierter Fehler (ED) ausgehend von der theoretischen Position und dem Sollwert bereclinet wird,
- ein tatsächlicher Fehler (ER) zwischen der Istwertposition und dem Sollwert mit dem tolerierten Fehler verglichen wird, und
- auf ein Fehlverhalten des Aktors geschlossen wird, wenn der tatsächliche Fehler größer als der tolerierte Fehler ist.

2. Verfahren nach Anspruch 1, **dadurch gekennzeichnet, dass** die theoretische Position des Aktors durch eine Filterung des Sollwertes erhalten wird.

3. Verfahren nach Anspruch 2, **dadurch gekennzeichnet, dass** die theoretische Position bei einer Vorzeichenänderung des Sollwertes mit der tatsächlichen Position gleichgesetzt wird.

4. Verfahren nach Anspruch 2, **dadurch gekennzeichnet, dass** die theoretische Position bei jeder Änderung des Sollwertes mit der tatsächhichen Position gleichgesetzt wird.

5. Verfahren nach Anspruch 1 oder 2, dadurch gekeilnzeichnet, dass der tolerierte Fehler in Abhängigkeit von dem Absolutwert des Unterschieds zwischen dem Sollwert und der theoretischen Position sowie von einer statischen Fehlerkonstanten berechnet wird.
